# DEMANDE DE BREVET EUROPEEN

(11) **EP 0 870 677 A1**
(43) Date de publication de la demande: **14.10.1998**
(21) Numéro de dépôt: 98400652.8
(22) Date de dépôt: 20.03.1998
(51) Int. Cl.: B64G 1/50

(54) **Système de transfert et de rejet de chaleur, notamment pour véhicules spatiaux**

(30) Priorité: 07.04.1997 FR 9704201
(71) Demandeur: AEROSPATIALE Société Nationale Industrielle, 75016 Paris (FR)
(72) Inventeur: Amidieu, Marcel Jacques, 06150 Cannes Le Bocca (FR); Bard, Max Roger, 06110 Le Cannet (FR); Moschetti, Bernard, 06550 La Roquette Sur Siagne (FR); Durand, Yannick, 06550 Opio (FR)
(74) Mandataire: Bonnetat, Christian

(57) **Abrégé**

- La présente invention concerne un système de transfert de chaleur entre une structure (1), notamment un véhicule spatial, et l'environnement de ladite structure, comprenant :
   . un panneau radiateur (3), portant un condenseur (4) et articulé sur ladite structure (1) pour prendre soit une position repliée (3A), soit une position déployée (3B ou 3C) ; et
   . un évaporateur (9), porté par ladite structure (1) et relié audit condenseur (4) par des conduits (7, 8) permettant le déploiement dudit panneau radiateur (3),
   l'ensemble dudit condenseur (4) et dudit évaporateur (9) formant une boucle diphasique à pompage capillaire.
- Selon l'invention, ledit panneau radiateur (3) porte au moins un conduit de chaleur (12) en contact thermique avec ledit condenseur (4).

## Description

La présente invention concerne un système de transfert et de rejet de chaleur, notamment pour véhicules spatiaux.

On sait que les équipements embarqués à bord des véhicules spatiaux dissipent de la chaleur qui doit être évacuée, en grande partie, à l'extérieur desdits véhicules. Cette chaleur est transférée à l'espace au moyen de radiateurs fixes ou déployables.

A cet effet, on connaît déjà, par exemple par le brevet américain n° 5 117 901, un système de transfert à fluide diphasique pour transférer la chaleur entre une structure, telle qu'un véhicule spatial et l'environnement de cette structure. Ce système connu comprend :
- un panneau radiateur articulé sur la structure pour prendre soit une position de repos, repliée le long de celle-ci (correspondant à la phase de lancement du véhicule spatial), soit une position de dissipation thermique, déployée en saillie par rapport à ladite structure (lorsque le véhicule spatial décrit son orbite), ledit panneau radiateur portant un condenseur ;
- un évaporateur porté par ladite structure et relié audit condenseur par des conduits au moins localement souples (grâce à des soufflets de raccord ou à la souplesse de la matière constitutive des conduits, etc ...), pour permettre le passage dudit panneau radiateur de sa position repliée à sa position déployée.

Dans un tel système de transfert, l'ensemble de l'évaporateur, du condenseur et desdits conduits forment une boucle diphasique à pompage capillaire dans laquelle un fluide, pouvant exister soit en phase liquide, soit en phase vapeur, passe en phase vapeur dans ledit évaporateur sous l'action de la chaleur de ladite structure et est transmis, par lesdits conduits audit condenseur, où il passe en phase liquide en libérant de la chaleur audit environnement, après quoi le liquide est ramené audit évaporateur.

Dans un tel système de transfert de chaleur connu, afin d'utiliser au maximum la surface du panneau radiateur, ledit condenseur présente une forme complexe en serpentin plan, pour pouvoir optimiser l'échange de chaleur avec l'extérieur du véhicule spatial.

Une telle structure présente des inconvénients. Tout d'abord, le condenseur est relativement long et coûteux à fabriquer et il peut présenter des pertes de charge importantes dans le fluide. De plus, lorsqu'un élément du système de transfert de chaleur tombe en panne, la totalité du panneau radiateur est inhibée.

La présente invention a pour objet de remédier à ces inconvénients.

Ainsi, selon un premier aspect de la présente invention, le système de transfert de chaleur entre une structure, notamment un véhicule spatial, et l'environnement de ladite structure, comprenant :
- un panneau radiateur, portant un condenseur et articulé sur ladite structure pour prendre soit une position repliée, soit une position déployée ; et
- un évaporateur, porté par ladite structure et relié audit condenseur par des conduits permettant le déploiement dudit panneau radiateur,
l'ensemble dudit évaporateur et dudit condenseur formant une boucle diphasique à pompage capillaire, est remarquable en ce que ledit panneau radiateur porte au moins un conduit de chaleur en contact thermique avec ledit condenseur.

Ainsi, dans le système de transfert de chaleur de la présente invention, le ou lesdits conduits de chaleur participent au transfert de chaleur entre le condenseur et l'extérieur du véhicule spatial. Dans ces conditions, le condenseur peut présenter une forme simple, par exemple celle de segments droits ou d'une boucle. Pour profiter au maximum de la surface dissipatrice du panneau radiateur, il est avantageux que ledit panneau radiateur porte une pluralité de conduits de chaleur, répartis sur ledit panneau radiateur et en contact thermique avec ledit condenseur.

Ces conduits de chaleur peuvent être linéaires et disposés parallèlement les uns aux autres sur ledit panneau radiateur.

Lesdits conduits de chaleur peuvent être de tout type connu et peuvent, éventuellement, être formés par un simple barreau de matière thermiquement conductrice. Cependant, dans un mode avantageux de réalisation, lesdits conduits de chaleur sont constitués par des tubes, dont la paroi peut être traversée par la chaleur et qui sont obturés à leurs extrémités pour délimiter une cavité close à l'intérieur de laquelle est enfermé un fluide évaporable et condensable. De tels tubes sont communément appelés caloducs en français et heat-pipes en anglais.

Ainsi, les conduits de chaleur sont eux-mêmes des dispositifs linéaires diphasiques dans lesquels le fluide passe alternativement de la phase liquide à la phase vapeur, puis de la phase vapeur à la phase liquide, en se déplaçant le long dudit conduit de chaleur.

Par ailleurs, selon une autre caractéristique importante de la présente invention, grâce à l'agencement des conduits de chaleur sur le panneau radiateur, il est possible de prévoir au moins une boucle diphasique à pompage capillaire additionnelle, semblable à la première, dont l'évaporateur et le condenseur sont, de façon semblable à l'évaporateur et au condenseur de ladite première boucle, respectivement portés par ladite structure et par ledit panneau radiateur et le condenseur de ladite première boucle et le condenseur de ladite boucle additionnelle sont thermiquement reliés l'un à l'autre par le ou lesdits conduits de chaleur.

On obtient ainsi une grande fiabilité dans la dissipation de chaleur puisque, si l'une des boucles diphasiques tombe en panne, l'une ou les autres boucles additionnelles continuent à alimenter en chaleur le réseau des conduits de chaleur, de sorte que le panneau radiateur reste actif.

Les figures du dessin annexé feront bien comprendre comment l'invention peut être réalisée. Sur ces figures, des références identiques désignent des éléments semblables.

La figure 1 est une vue en perspective schématique partielle d'un véhicule spatial équipé d'un panneau radiateur portant un condenseur faisant partie d'une boucle diphasique à pompage capillaire.

La figure 2 illustre schématiquement un premier mode de réalisation de la présente invention.

La figure 3 illustre, également schématiquement, un second mode de réalisation de la présente invention.

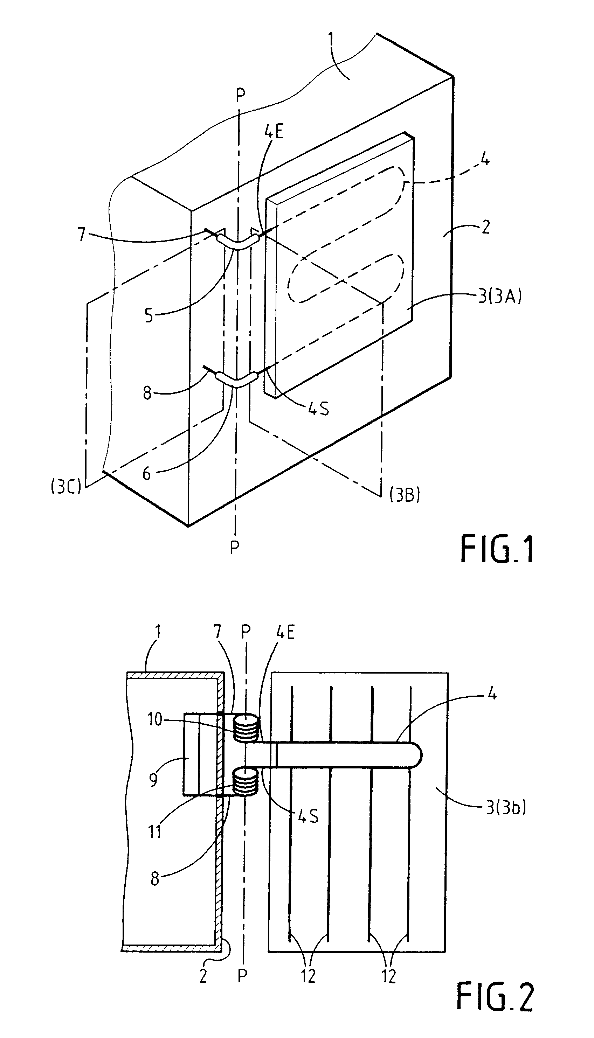

Sur la figure 1, on a représenté partiellement un véhicule spatial 1 comportant une face 2 contre laquelle peut être rabattu un panneau radiateur 3, par exemple pendant les opérations de lancement et de mise en orbite dudit véhicule spatial.

A l'aide d'un moyen mécanique connu et non représenté, le panneau radiateur 3 peut prendre une position déployée, lorsque ledit véhicule spatial décrit son orbite.

Cette position déployée peut, par exemple, être orthogonale à ladite face 2 (position 3B), ou bien parallèle à celle-ci (position 3C).

Sur la figure 1, l'axe de rotation du panneau radiateur 3 lui permettant de passer de sa position repliée 3A à sa position déployée (3B ou 3C) porte la référence PP. Le panneau radiateur articulé 3 porte un serpentin condenseur 4 dont les extrémités 4E et 4S sont reliées, respectivement par des manchons souples et étanches 5 et 6, à des embouts 7 et 8 d'un évaporateur, porté par ladite structure 1 et non représenté sur la figure 1.

La figure 1, qui représente un système de transfert de chaleur connu, montre que le panneau radiateur 3 porte un unique condenseur 4 de sorte que si un élément quelconque de la boucle diphasique tombe en panne, la totalité du panneau radiateur 3 devient inactive.

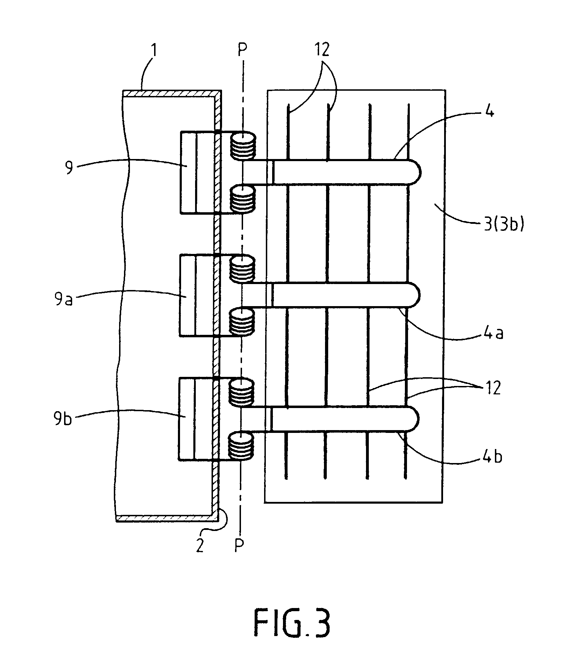

Sur les figures 2 et 3, on a représenté deux modes de réalisation de la présente invention permettant d'améliorer le système de la figure 1. Dans ces modes de réalisation, les manchons souples 5 et 6 ont été remplacés par des hélices 10 et 11 formées dans lesdits embouts 7 et 8 et respectivement reliées auxdites extrémités 4E et 4S.

Sur cette figure 2, on a représenté de plus l'évaporateur 9 porté par le véhicule spatial 1. Comme on peut le voir, le condenseur 4 présente la forme d'une simple boucle, qui est en contact thermique avec une pluralité de conduits de chaleur 12 parallèles, répartis sur la totalité du panneau radiateur 3. Ainsi, la chaleur transmise audit condenseur 4 est répartie par contact auxdits conduits de chaleur 12. Ceux-ci participent donc à la dissipation, à l'extérieur du véhicule spatial 1, de la chaleur engendrée à l'intérieur de ce dernier.

Dans le mode de réalisation préféré représenté sur la figure 3, le système de transfert de chaleur comporte, en plus de la boucle diphasique 9, 4, deux boucles diphasiques additionnelles 9a, 4a et 9b, 4b disposées de telle façon que les trois condenseurs 4, 4A et 4B sont en contact thermique avec les conduits de chaleur 12.

On comprendra aisément que si l'une des trois boucles diphasiques tombe en panne, les deux autres continuant à fonctionner, de la chaleur continue à être dissipée par le panneau radiateur 3, grâce à la coopération des condenseurs restant en service et des conduits de chaleur 12.

## Revendications

1. Système de transfert de chaleur entre une structure (1), notamment un véhicule spatial, et l'environnement de ladite structure, comprenant :
- un panneau radiateur (3), portant un condenseur (4) et articulé sur ladite structure (1) pour prendre soit une position repliée (3A), soit une position déployée (3B ou 3C) ; et
- un évaporateur (9), porté par ladite structure (1) et relié audit condenseur (4) par des conduits (7, 8) permettant le déploiement dudit panneau radiateur (3),
l'ensemble dudit condenseur (4) et dudit évaporateur (9) formant une boucle diphasique à pompage capillaire,
caractérisé en ce que ledit panneau radiateur (3) porte au moins un conduit de chaleur (12) en contact thermique avec ledit condenseur (4).

2. Système de transfert de chaleur selon la revendication 1, caractérisé en ce que ledit panneau radiateur (3) porte une pluralité de conduits de chaleur (12), répartis sur ledit panneau radiateur (3) et en contact thermique avec ledit condenseur (4).

3. Système de transfert de chaleur selon l'une des revendications 1 ou 2,
caractérisé en ce que lesdits conduits de chaleur (12) sont linéaires et disposés parallèlement les uns aux autres sur ledit panneau radiateur (3).

4. Système de transfert de chaleur selon l'une des revendications 2 ou 3,
caractérisé en ce que lesdits conduits de chaleur (12) sont constitués par des tubes, dont la paroi peut être traversée par la chaleur et qui sont obturés à leurs extrémités pour délimiter une cavité close à l'intérieur de laquelle est enfermé un fluide évaporable et condensable.

5. Système de transfert de chaleur selon l'une des revendications 1 à 4,
caractérisé en ce qu'il comporte au moins une boucle diphasique à pompage capillaire additionnelle (4a, 9a - 4b, 9b), semblable à la première (4, 9), dont l'évaporateur (9a, 9b) et le condenseur (4a, 4b) sont, de façon semblable à l'évaporateur (9) et au condenseur (4) de ladite première boucle (4, 9), respectivement portés par ladite structure (1) et par ledit panneau radiateur (3) et en ce que le condenseur (4) de ladite première boucle et le condenseur (4a, 4b) de ladite boucle additionnelle sont thermiquement reliés l'un à l'autre par le ou lesdits conduits de chaleur (12).
